# FASCICULE DE BREVET EUROPEEN

(11) **EP 0 680 130 B1**
(45) Date de publication et mention de la délivrance du brevet: **05.01.2000**
(21) Numéro de dépôt: 95400902.3
(22) Date de dépôt: 21.04.1995
(51) Int. Cl.: H02K 1/16, H02K 1/32, H02K 1/26

(54) **Machine électrique synchrone à pôles lisses et à entrefer constant**
Elektrische Synchronmaschine mit glatten Polen und konstantem Luftspalt
Synchronous electric machine with smooth poles and constant air gap

(30) Priorité: 29.04.1994 FR 9405268
(43) Date de publication de la demande: 02.11.1995
(73) Titulaire: ABB INDUSTRIE, F-77430 Champagne sur Seine (FR)
(72) Inventeur: Ammar, Brahim, F-77250 Villecerf (FR)
(74) Mandataire: Berger, Helmut

(56) Documents cités:
- EP-A- 0 052 383
- FR-A- 392 904
- FR-A- 1 318 289
- US-A- 2 708 724

## Description

L'invention concerne une machine électrique synchrone du type à pôles lisses et à entrefer constant, selon le préambule de la revendication 1.

Une machine de ce type est connue par le document US-2708724. Mais cette machine présente l'inconvénient majeur que son dispositif de ventilation même s'il apparaît efficace, provoque des pertes de charge importantes à l'entrée du rotor, ce qui réduit notablement le débit d'air, et d'exiger des ampèretours de réaction d'induit importants, ce qui a pour conséquence la nécessité d'augmenter l'entrefer, pour conserver une valeur acceptable du coefficient du court-circuit. De l'importance des ampèretours de réaction d'induit, combinée avec l'augmentation de l'entrefer résulte une augmentation notable de la puissance d'excitation et ce malgré l'avantage de l'égalité des réactances synchrones transversale et longitudinale.

La présente invention a pour but de proposer une machine synchrone qui ne présente pas les inconvénients susmentionnés des machines connues et permet de diminuer les pertes de charge à l'entrée du rotor, la valeur des ampèretours de réaction d'induit et la puissance d'excitation.

Pour atteindre ce but, la machine synchrone selon l'invention présente les caractéristiques qui sont énoncées dans la partie caractérisante de la revendication 1.

Par le document FR-A-392904 est certes connu de disposer les encoches d'un même pas polaire parallèlement, mais dans un but différent de celui de l'invention, et surtout la profondeur des encoches augmente à partir de l'axe polaire, contrairement à l'invention.

D'autres caractéristiques de l'invention font l'objet de revendications dépendantes.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

La figure 1 est une vue illustrant la section transversale du rotor d'une machine synchrone selon la présente invention.

La figure 2 est une vue schématique axiale, avec arrachement, d'une machine synchrone selon la présente invention.

La figure 3 est une vue d'une encoche du rotor d'une machine synchrone selon la présente invention.

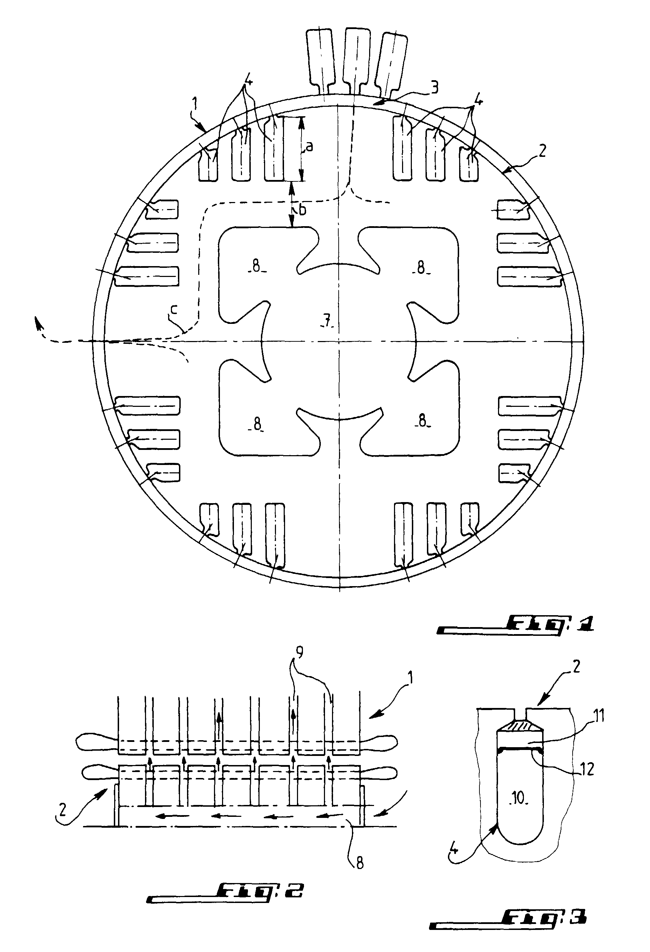

Sur la figure 1, les numéros de référence 1 à 3 désignent respectivement le stator, le rotor et l'entrefer formé entre le stator et le rotor, d'une machine électrique synchrone du type à pôles lisses et à entrefer constant.

L'invention présente la particularité principale que les encoches 4 de chaque pas polaire du rotor de forme cylindrique sont parallèles à l'axe du pôle. Dans le mode de réalisation de l'invention, qui est représenté à titre d'exemple, la profondeur a des encoches 4 diminue dans le sens d'éloignement de l'axe du pôle, de façon que la zone centrale du rotor 2, qui est délimitée par les fonds des encoches présente une forme sensiblement carrée. Cette zone centrale comporte un passage central circulaire 7 destiné à recevoir l'arbre rotor et, entre la périphérie de ce passage et la ligne délimitée par les fonds des encoches 4, quatre canaux de ventilation 8. Ces canaux présentent une section transversale sensiblement triangulaire et sont disposés de façon que la distance b entre les fonds des encoches 4 et les canaux de ventilation 8, c'est-à-dire la hauteur de ce qu'on appelle la couronne rotor, soit constante. La valeur de cette hauteur dépend du flux magnétique dans la machine et de la longueur de fer. Les lignes à traits interrompus indiquent des lignes de champ magnétique.

Grâce à la forme et la disposition particulières des encoches 4 du rotor 2, la section transversale des canaux de ventilation 8 est plus importante que les canaux qu'on peut prévoir dans les rotors connus à encoches radiales.

Les encoches du rotor selon l'invention sont de section variable. Par conséquent, le nombre de spires varie d'une encoche à l'autre. Cette variation de la section pourrait être obtenue par variation de la hauteur ou de la largeur des encoches et en maintenant constante respectivement la largeur et la hauteur.

La disposition à axe parallèle des encoches du rotor procure une augmentation de la section de passage d'air de refroidissement formée par les canaux axiaux 8, à l'entrée du rotor, de 40 à 70 %, suivant la polarité et pour une induction constante dans la couronne rotor.

Les encoches du rotor peuvent être du type semi-fermé à fond plat ou arrondi, rectangulaire à fond plat ou arrondi ou trapézoïdal à fond plat ou arrondi. Les bobines du rotor sont concentriques et peuvent être soit en fil rond isolé, soit en fil méplat isolé.

Concernant le dispositif des canaux de ventilation 8, il est à noter que la disposition à axes parallèles des encoches 4 du rotor permet une augmentation de la section de passage d'air de refroidissement à l'entrée du rotor de 40 à 70 % suivant la polarité et pour une conduction constante dans la couronne rotor. D'autre part, on constate en se référant à la figure 2, que le rotor comporte, en plus des canaux de ventilation axiaux 8, des canaux de ventilation radiaux 9, comme cela est connu en soi.

Grâce à la configuration particulière des encoches du rotor et des canaux de ventilation axiaux 8 de plus grande section transversale, la machine selon l'invention présente des pertes de charge plus faibles à l'entrée du rotor, d'où un débit d'air plus important et une puissance d'excitation plus faible. Cette dernière est occasionnée par une faible valeur des ampèretours de réaction d'induit, par l'égalité entre les réactances synchrones transversales et longitudinales et par la possibilité de réduire la valeur de l'entrefer.

Il est encore à noter que le rotor peut être massif en formé par empilage de tôles épaisses ou fines. Dans le dernier cas qui est représenté aux figures les canaux de ventilation 8 et le passage central 7 communiquent. Ils sont découpés en une seule opération.

En se reportant à la figure 3 on prend connaissance d'une réalisation particulière de la cage amortisseur dont chaque encoche peut être pourvue. En effet, au-dessus de la bobine rotor 10 est placé un bobinage amortisseur 11 séparé de la bobine rotor 10 par un isolant 12. Ce bobinage amortisseur situé dans la partie supérieure de l'encoche pourrait être réalisé sous forme d'une barre.

## Revendications

1. Machine électrique synchrone, du type à pôles lisses et à entrefer constant, comportant un rotor dans lequel les bobines sont logées dans des encoches s'étendant à partir de la périphérie du rotor et qui est pourvue d'un dispositif de canaux axiaux et, le cas échéant radiaux, de ventilation, caractérisée en ce que les encoches (4) d'un pas polaire sont orientées parallèlement à l'axe du pôle et la profondeur (a) des encoches (4) d'un pas polaire diminue dans la direction d'éloignement de l'axe polaire de façon à augmenter la section transversale de la zone centrale délimitée par les fonds des encoches (4) et la section transversale des canaux de ventilation axiaux (8).

2. Machine selon la revendication 1, caractérisée en ce que la section transversale des encoches (4) et le nombre de spires contenus dans l'encoche sont variables.

3. Machine selon l'une des revendications 1 ou 2, caractérisée en ce que la profondeur des encoches diminue de façon que la zone centrale délimitée par les fonds des encoches (4a) présente une forme sensiblement carrée.

4. Machine selon la revendication 3, caractérisée en ce que le rotor comporte quatre canaux de ventilation axiaux (8) de section transversale sensiblement triangulaire et en ce que ces canaux sont disposés de telle façon que la couronne rotor soit constante.

5. Agencement selon l'une des revendications précédentes, caractérisé en ce qu'une encoche comprend, au-dessus des bobines rotor (10) dans la partie supérieure d'encoche un bobinage amortisseur (11), séparé des bobines rotor (10) par un matériau isolant (12).

## Patentansprüche

1. Synchrone, elektrische Maschine, von der Art mit gleichmäßigen Polen und konstantem Luftspalt, einen Rotor umfassend, in dem die Spulen in Aussparungen untergebracht sind, die sich von der Peripherie des Rotors erstrecken und die mit einer Vorrichtung axialer Kanäle versehen ist und ggf. mit radialen Belüftungskanälen, dadurch gekennzeichnet, daß die Aussparungen (4) einer Polteilung parallel zur Achse des Pols ausgerichtet sind und die Tiefe (a) der Aussparungen (4) einer Polteilung sich in der Enffernungsrichtung der Polachse derart verringert, daß der von den Böden der Aussparungen (4) begrenzte, querliegende Abschnitt der zentralen Zone und der querliegende Abschnitt der axialen Belüftungskanäle (8) erhöht werden.

2. Maschine gemäß Anspruch 1, dadurch gekennzeichnet, daß der querliegende Abschnitt der Aussparungen (4) und die Anzahl der in der Aussparung enthaltenen Windungen variabel sind.

3. Maschine gemäß einem der Ansprüche 1 oder 2, dadurch gekennzeichnet, daß die Tiefe der Aussparungen sich derart verringert, daß die von den Böden der Aussparungen (4a) begrenzte zentrale Zone eine deutlich quadratische Form aufweist.

4. Maschine gemäß Anspruch 3, dadurch gekennzeichnet, daß der Rotor vier axiale Belüftungskanäle (8) des deutlich dreieckigen, querliegenden Abschnitts aufweist und daß diese Kanäle derart angeordnet sind, daß der Rotorkranz konstant ist.

5. Anordnung gemäß einem der vorherigen Ansprüche, dadurch gekennzeichnet, daß eine Aussparung oberhalb der Rotorspulen (10) in dem oberen Teil der Aussparung eine stoßdämpfende Wicklung (11) umfaßt, die von den Rotorspulen (10) durch ein isolierendes Material (12) getrennt ist.

## Claims

1. Synchronous electric machine of the type with non-salient poles and with a constant air gap comprising a rotor in which the coils are housed in notches extending from the periphery of the rotor and which is provided with an axial and, if appropriate, radial ventilation channels device, characterised in that the notches (4) of a pole pitch are orientated parallel to the axis of the pole and the depth (a) of the notches (4) of a pole pitch reduces in the direction away from the pole axis so as to increase the cross section of the central zone delimited by the bottoms of the notches (4) and the cross section of the axial ventilation channels (8).

2. Machine according to claim 1, characterised in that the cross section of the notches (4) and the number of spires contained in the notch are variable.

3. Machine according to claim 1 or 2, characterised in that the depth of the notches reduces so that the central zone delimited by the bottoms of the notches (4a) has an approximately square shape.

4. Machine according to claim 3, characterised in that the rotor comprises four axial ventilation channels (8) having an approximately triangular cross section and in that these channels are disposed so that the rotor ring is constant.

5. Disposition according to one of the preceding claims, characterised in that a notch includes above the rotor coils (10) in the upper notch portion a damper winding (11) separated from the rotor coils (10) by an insulating material (12).
